# EUROPÄISCHE PATENTSCHRIFT

(11) **EP 2 390 033 B1**
(45) Veröffentlichungstag und Bekanntmachung des Hinweises auf die Patenterteilung: **11.07.2018**
(21) Anmeldenummer: 11004240.5
(22) Anmeldetag: 23.05.2011
(51) Int. Cl.: B27G 19/06, B27G 19/08, B23D 57/00

(54) **Sägevorrichtung**
Saw device
Dispositif de sciage

(30) Priorität: 28.05.2010 DE 102010021954
(43) Veröffentlichungstag der Anmeldung: 30.11.2011
(73) Patentinhaber: Mafell AG, 78727 Oberndorf a.N. (DE)
(72) Erfinder: Eisenbeis, Dieter, 72160 Horb-Obertalheim (DE); Schellhammer, Karl, 72172 Sulz-Fischingen (DE)
(74) Vertreter: Manitz Finsterwald Patentanwälte PartmbB

(56) Entgegenhaltungen:
- DE-A1- 4 406 034
- JP-A- 10 286 752
- US-A- 4 016 856

## Beschreibung

Die vorliegende Erfindung betrifft eine Sägevorrichtung zum spanenden Trennen eines Werkstücks gemäß dem Oberbegriff des Anspruchs 1. Eine solche Sägevorrichtung ist der DE-A-44 06 034 A1 zu entnehmen. Um Werkstücke wie Holz-, Kunststoff- oder Metallteile in einem unterbrechungsfreien Schnitt zu zerteilen, werden beispielsweise Bandsägen eingesetzt, bei welchen ein flexibles, zu einem geschlossenen Ring verschweißtes Sägeblatt über Rollen umläuft. Aufgrund der Flexibilität des Sägeblatts können mit derartigen Bandsägen nicht nur gerade Schnitte, sondern in gewissem Ausmaß auch gekrümmt verlaufende Schnitte durchgeführt werden.

Da das Sägeband jedoch grundsätzlich flächig ausgestaltet ist, sind beliebige Relativbewegungen zwischen dem Werkstück und der Bandsäge während des Sägens nicht möglich. Die Möglichkeit zum Sägen eines bestimmten Musters oder Profils ist daher bei einer Bandsäge oft nicht gegeben.

Weiterhin sind angetriebene Sägeketten oder Sägeseile bekannt, welche um ein starres Schwert umlaufen. Das flächig ausgestaltete Schwert verhindert auch bei derartigen Sägevorrichtungen das Durchführen beliebig gekrümmter, d.h. entlang beliebiger Bahnen verlaufender Schnitte. Insbesondere sind keine punktuellen Richtungswechsel möglich.

In der US-A-4 016 856 ist eine Seilsäge offenbart, bei welcher das Sägeseil von einer Antriebsrolle angetrieben und über mehrere Umlenkrollen geführt ist. Die Seilenden des Sägeseils sind an einer Antriebstrommel befestigt.

Die DE-A-44 06 034 A1 offenbart eine Seilsäge, bei welcher ein endloses Seil um zwei Umlenkrollen umläuft. Das zugehörige Traggestell weist eine vertikale Stütze sowie zwei waagerechte Ausleger auf, welche gemeinsam eine seitlich geöffnete Gabel definieren und einen Freiraum um das vordere Seiltrum schaffen.

Es ist eine Aufgabe der Erfindung, ein spanendes Trennen von Werkstücken im unterbrechungsfreien Schnitt und in beliebiger Schnittführung zu ermöglichen.

Die Lösung der Aufgabe erfolgt durch eine Sägevorrichtung mit den Merkmalen des Anspruchs 1.

Erfindungsgemäß umfasst eine Sägevorrichtung eine Tragkonstruktion, an der wenigstens eine Antriebsrolle und zumindest eine zu dieser beabstandet angeordnete Umlenkrolle drehbar gelagert sind, einen Motor zum Antreiben der Antriebsrolle und ein als geschlossene Schleife ausgebildetes Sägeseil, das über die Antriebsrolle und die Umlenkrolle geführt ist. Das Sägeseil ist zu einem isotropen Schneiden ausgebildet und die Tragkonstruktion definiert einen Ausladungsbereich, in welchem das Sägeseil von einem Freiraum umgeben ist. Die Tragkonstruktion umfasst wenigstens einen Träger und zumindest zwei an dem Träger angebrachte Ausleger für die Antriebsrolle und die Umlenkrolle, wobei der Träger und die Ausleger gemeinsam den Ausladungsbereich aufspannen. Als Träger ist ein Spaltkeil vorgesehen, dessen Dicke im Wesentlichen der durch das Sägeseil vorgegebenen Schnittbreite entspricht. Je nach Ausgestaltung der Tragkonstruktion kann eine Vielzahl von Antriebsrollen und Umlenkrollen vorgesehen sein, um das Sägeseil in geeigneter Weise zu führen. Da das Sägeseil zu einem isotropen Schneiden ausgebildet ist, kann es in beliebigen Richtungen durch das Werkstück geführt werden, d.h. das Sägeseil ermöglicht punktuelle Richtungswechsel. In Verbindung mit dem Ausladungsbereich wird somit das Ausführen von Schnitten mit beliebigem Verlauf ermöglicht. Aufgrund des in dem Ausladungsbereich vorhandenen Freiraums rund um das Sägeseil wird nämlich die Bewegung des Sägeseils nicht durch weitere Bauteile der Sägevorrichtung behindert. Die Erfindung kombiniert also in vorteilhafter Weise das Konzept eines Ausladungsbereichs, wie es zum Beispiel von Laubsägen bekannt ist, mit dem Konzept eines umlaufend angetriebenen, isotrop schneidenden Sägeseils. Es wird dadurch ein effektives und exaktes Sägen auch bei komplizierter Schnittführung ermöglicht.

Generell kann die Sägevorrichtung eine "kettensägenartige" Konfiguration aufweisen, bei welcher der Durchmesser der Antriebsrolle und der Umlenkrolle wesentlich kleiner ist als der Abstand zwischen den beiden Rollen, und wobei der Spaltkeil als Träger zum Halten der Rollen im vorgegebenen Abstand vorgesehen ist.

Bevorzugte Ausführungsformen der Erfindung sind in den abhängigen Ansprüchen, der Beschreibung sowie der Zeichnung angegeben.

Die Erfindung wird im Folgenden beispielhaft unter Bezugnahme auf die Zeichnung beschrieben.
- Fig. 1: zeigt eine vereinfachte Seitenansicht einer Sägevorrichtung gemäß einer Ausführungsform der Erfindung.
- Fig. 2: zeigt eine vereinfachte Seitenansicht einer alternativen, nicht erfindungsgemäßen Sägevorrichtung.

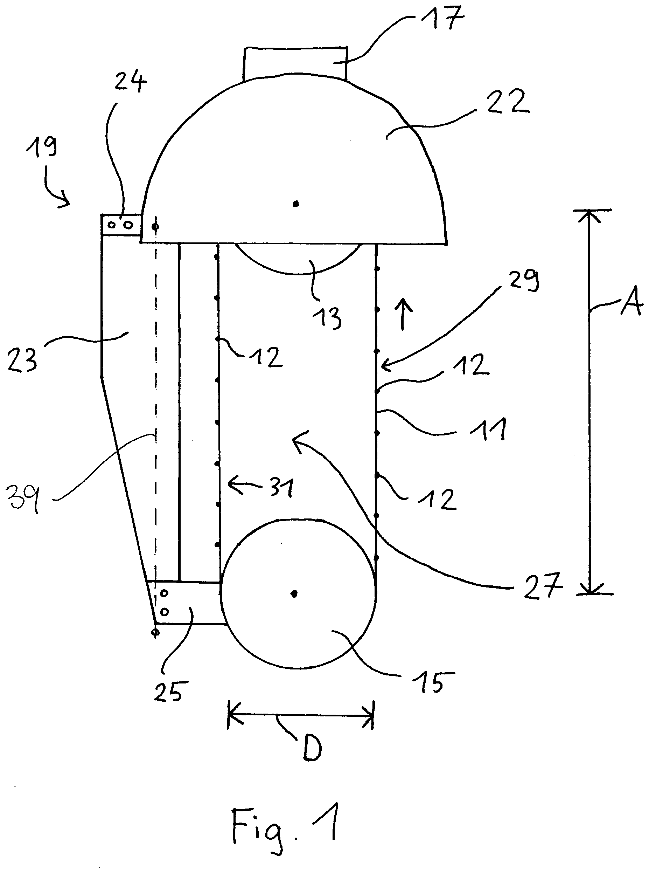

Gemäß Fig. 1 umfasst eine Sägevorrichtung ein Sägeseil 11, welches als geschlossene Schleife ausgebildet ist und während des Sägebetriebs um eine Antriebsrolle 13 und um eine Umlenkrolle 15 umläuft. Das Sägeseil 11 besteht aus einem Trägerseil sowie mehreren identisch ausgeführten und in gleichmäßigem Abstand an dem Trägerseil angebrachten Schneidelementen 12. Um die erforderliche Stabilität und Haltbarkeit zu gewährleisten, ist das Trägerseil vorzugsweise ein feingliedriges Drahtseil von beispielsweise 1,5 mm Durchmesser. Die Schneidelemente 12 sind aus gehärtetem Stahl hergestellt und weisen Schneiden auf, die bezüglich der Seilachse rotationssymmetrisch sind, sodass sie isotrop schneiden.

Das Sägeseil 11 ist in jeweiligen nicht dargestellten Nuten der Antriebsrolle 13 und der Umlenkrolle 15 geführt, wobei der Boden und/oder die Wände der Nuten bezüglich der Abmessungen der Schneidelemente 12 glatt ausgeführt sind. Alternativ könnten auch Aussparungen zum Aufnehmen der Schneidelemente 12 in den Nuten vorgesehen sein. Vorzugsweise sind die Antriebsrolle 13 und die Umlenkrolle 15 aus schwer zerspanbarem Kunststoff hergestellt und austauschbar. Die Antriebsrolle 13 und/oder die Umlenkrolle 15 könnten auch mehrteilig ausgeführt sein, wobei lediglich ein jeweiliger Abschnitt aus schwer zerspanbarem Kunststoff auswechselbar ist. Um das Sägeseil 11 spannen zu können, ist die Antriebsrolle 13 oder die Umlenkrolle 15 mittels einer Schnellspannvorrichtung verstellbar.

Die Antriebsrolle 13 und die Umlenkrolle 15 werden durch eine Tragkonstruktion 19 der Sägevorrichtung in einem vorgegebenen Abstand A gehalten. Die Tragkonstruktion 19 umfasst einen nicht näher dargestellten Grundrahmen, welcher auch einen schwenkbar an diesem angebrachten Elektromotor 17 sowie eine Schutzhaube 22 trägt, einen in den Grundrahmen integrierten oberen Ausleger 24, einen sich vertikal nach unten erstreckenden Spaltkeil 23 sowie einen unteren Ausleger 25, welcher von dem Spaltkeil 23 absteht. Der Spaltkeil 23 ist als plattenartiges Metallteil ausgebildet, dessen Dicke im Wesentlichen der durch das Sägeseil 11 vorgegebenen Schnittbreite entspricht.

Wie aus Fig. 1 hervorgeht, verläuft die Anordnung aus oberem Ausleger 24, Spaltkeil 23 und unterem Ausleger 25 bogen- oder bügelartig um die freien Trumabschnitte 29, 31 des Sägeseils 11 herum und definiert daher einen Ausladungsbereich 27, in welchem ein Arbeitsabschnitt des Sägeseils 11 von einem Freiraum umgeben ist. Die Sägevorrichtung kann entweder fest installiert sein oder für einen Handbetrieb ausgelegt sein und dementsprechend geeignete Handgriffe aufweisen.

Während des Betriebs treibt der Elektromotor 17 die Antriebsrolle 13 drehend an und das Sägeseil 11 läuft in der in Fig. 1 mit einem Pfeil dargestellten Richtung um die Anordnung aus Antriebsrolle 13 und Umlenkrolle 15 um. Der vordere Trumabschnitt 29 des Sägeseils 11 kann nun zum Sägen durch ein Werkstück geführt werden. Bei einem Richtungswechsel, welcher aufgrund der Ausbildung des Sägeseils 11 zum isotropen Schneiden jederzeit möglich ist, kann sich der entsprechende Teil des Werkstücks durch den Freiraum zwischen dem vorderen Trumabschnitt 29 und dem hinteren Trumabschnitt 31 des Sägeseils 11 bewegen. Die Eintauchtiefe hinsichtlich gekrümmter Schnitte ist also durch den Durchmesser D der Antriebsrolle 13 und der Umlenkrolle 15 vorgegeben. Gerade Schnitte können dagegen in beliebiger Länge durchgeführt werden, da sich der vordere Trumabschnitt 29, der hintere Trumabschnitt 31 sowie der Spaltkeil 23 in einer gemeinsamen Ebene befinden und somit gemeinsam durch den Sägespalt bewegt werden können. Die maximale Dicke der zu bearbeitenden Werkstücke ist durch den Abstand A der den Durchmesser D aufweisenden Rollen 13, 15 gegeben.

Um die Stabilität des Spaltkeils 23 z.B. bei Schrägschnitten zu erhöhen, kann dieser z.B. mittels eines in Fig. 1 durch eine gestrichelte Linie angedeuteten Scharniers 39 aus einer flächigen Konfiguration in eine abgewinkelte Konfiguration überführt werden. Der Spaltkeil 23 kann auf diese Wiese "in sich gefaltet" werden, wobei es alternativ auch möglich ist, den Spaltkeil 23 als Ganzes zu verschwenken oder umzuklappen. Hierdurch wird das Widerstandsmoment gegen Verbiegen verbessert.

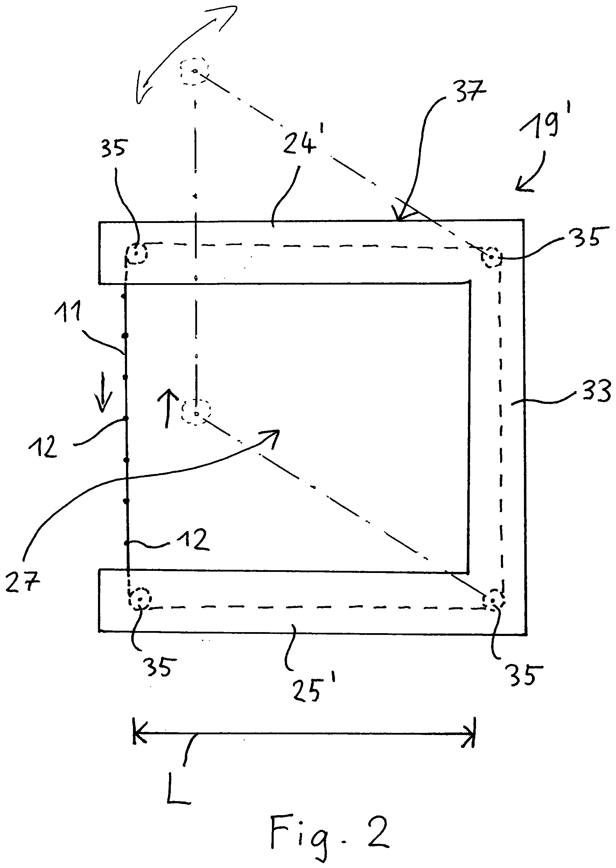

Fig. 2 zeigt eine Seilsäge, bei welcher anstelle des erfindungsgemäßen Spaltkeils 23 ein hohlprofilartiger Träger 33 vorgesehen ist, von welchem zwei ebenfalls hohlprofilartig ausgebildete Ausleger 24', 25' abstehen. Im Inneren der Hohlprofile sind mehrere Seilrollen 35 vorgesehen, durch welche das Sägeseil 11 in Form eines Rechtecks mit abgerundeten Ecken geführt wird. Wenigstens eine der Seilrollen 35 ist durch einen in Fig. 2 nicht dargestellten Motor angetrieben. Durch den Träger 33 sowie die von diesem abstehenden Ausleger 24', 25' wird ein U-förmiges oder bügelförmiges Traggestell 37 definiert, durch welches wie bei der Ausführungsform gemäß Fig. 1 ein Ausladungsbereich 27 aufgespannt wird. Die Eintauchtiefe der Sägevorrichtung ist bei der Ausführungsform gemäß Fig. 2 grundsätzlich durch die Länge L der Ausleger 24', 25' vorgegeben. Sie ist hier also nicht vom Durchmesser der Seilrollen 35 abhängig. Wenigstens eine der Seilrollen 35 ist verstellbar an der Tragkonstruktion 19 angebracht, um hierdurch das Sägeseil 11 nachspannen zu können.

Die erfindungsgemäße Säge kann als stationäres Gerät ausgebildet sein. Bevorzugt bewegt sich das Sägeseil 11 beim Sägen dann nach unten, wie durch den nach unten gerichteten Pfeil in Fig. 2 angedeutet. Der nach oben gerichtete Pfeil in Fig. 2 deutet die bevorzugte Laufrichtung des Sägeseils 11 an, wenn es sich bei der Säge um ein Handgerät handelt.

Eine strichpunktierte Linie in Fig. 2 deutet an, dass das Traggestell verstellbar sein kann, indem die Ausleger 24', 25' um mit den Drehachsen der Rollen 35 zusammenfallende Achsen verschwenkt werden, wodurch eine Parallelogramm- oder Rautenanordnung eingestellt werden kann. Hierdurch kann die Säge an unterschiedliche Anwendungen angepasst werden. Die Säge kann hierdurch auch in eine langgestreckte Konfiguration zusammengeklappt werden, um so Platz sparend gelagert und transportiert werden zu können.

Die erfindungsgemäße Sägevorrichtung eignet sich insbesondere zum exakten Sägen von Werkstücken aus Isolierstoff, Weichfaserstoff oder Styropor. Je nach Ausgestaltung des Sägeseils 11 können jedoch auch Werkstücke aus anderen Materialien gesägt werden. Zweckmäßigerweise beträgt der maximale Außendurchmesser der Schneidelemente 12 nur wenige Millimeter, z.B. 2 bis 4 mm, sodass sich ein dementsprechend dünner Schneidspalt ergibt und gegenüber einem herkömmlichen flächigen Sägeblatt praktisch ein eindimensionales Werkzeug vorliegt. Demgemäß können beliebig geformte Schnitte durchgeführt werden, d.h. mit dem erfindungsgemäßen Sägeseil kann - bezogen auf zur Längserstreckung des Sägeseils 11 radiale Richtungen - gleichermaßen isotrop gesägt werden, und zwar sowohl in entlang einer Führungsschiene geführten Schnitten als auch in Freihandschnitten.

### Bezugszeichenliste

- 11: Sägeseil
- 12: Schneidelement
- 13: Antriebsrolle
- 15: Umlenkrolle
- 17: Elektromotor
- 19, 19': Tragkonstruktion
- 22: Schutzhaube
- 23: Spaltkeil
- 24, 24': oberer Ausleger
- 25, 25': unterer Ausleger
- 27: Ausladungsbereich
- 29: vorderer Trumabschnitt
- 31: hinterer Trumabschnitt
- 33: Träger
- 35: Seilrolle
- 37: Traggestell
- 39: Scharnier

- A: Abstand
- D: Durchmesser
- L: Länge

## Patentansprüche

1. Sägevorrichtung zum spanenden Trennen eines Werkstücks mit einer Tragkonstruktion (19, 19'), an der wenigstens eine Antriebsrolle (13) und zumindest eine zu dieser beabstandet angeordnete Umlenkrolle (15) drehbar gelagert sind,
einem Motor (17) zum Antreiben der Antriebsrolle (13), und einem als geschlossene Schleife ausgebildeten Sägeseil (11), das über die Antriebsrolle (13) und die Umlenkrolle (15) geführt ist, wobei das Sägeseil (11) zu einem isotropen Schneiden ausgebildet ist und die Tragkonstruktion (19) einen Ausladungsbereich (27) definiert, in welchem das Sägeseil (11) von einem Freiraum umgeben ist, wobei
die Tragkonstruktion (19, 19') wenigstens einen Träger (23, 33) und zumindest zwei an dem Träger (23, 33) angebrachte Ausleger (24, 24', 25, 25') für die Antriebsrolle (13) und die Umlenkrolle (15) umfasst, wobei der Träger (23, 33) und die Ausleger (24, 24', 25, 25') gemeinsam den Ausladungsbereich (27) aufspannen, **dadurch gekennzeichnet, dass** als Träger ein Spaltkeil (23) vorgesehen ist, dessen Dicke im Wesentlichen der durch das Sägeseil (11) vorgegebenen Schnittbreite entspricht.

2. Sägevorrichtung nach Anspruch 1,
**dadurch gekennzeichnet, dass**
der Spaltkeil (23) zwischen einer flächigen Konfiguration und einer gewinkelten Konfiguration verstellbar ist, bevorzugt mittels einer Scharnier- oder Gelenkanordnung (39).

3. Sägevorrichtung nach Anspruch 1 oder 2,
**dadurch gekennzeichnet, dass**
die Tragkonstruktion (19') einen den Ausladungsbereich (27) aufspannenden Bügel (37) umfasst.

4. Sägevorrichtung nach zumindest einem der vorstehenden Ansprüche,
**dadurch gekennzeichnet, dass**
die Antriebsrolle (13) und/oder die Umlenkrolle (15) Führungsnuten für das Sägeseil (11) aufweisen, wobei bevorzugt der Boden und/oder die Wände der Führungsnuten jeweils bezüglich der Abmessungen von Schneidelementen (12) des Sägeseils (11) glatt ausgeführt sind.

5. Sägevorrichtung nach zumindest einem der vorstehenden Ansprüche,
**dadurch gekennzeichnet, dass**
die Antriebsrolle (13) und/oder die Umlenkrolle (15) zum Spannen des Sägeseils (11) verstellbar an der Tragkonstruktion (19, 19') gelagert sind.

6. Sägevorrichtung nach zumindest einem der vorstehenden Ansprüche,
**dadurch gekennzeichnet, dass**
die Antriebsrolle (13) und/oder die Umlenkrolle (15) auswechselbar sind.

7. Sägevorrichtung nach zumindest einem der vorstehenden Ansprüche,
**dadurch gekennzeichnet, dass**
die Antriebsrolle (13) und/oder die Umlenkrolle (15) aus einem harten Kunststoffmaterial hergestellt sind.

8. Sägevorrichtung nach zumindest einem der vorstehenden Ansprüche,
**dadurch gekennzeichnet, dass**
die Tragkonstruktion (19') verstellbar und insbesondere als Schwenkrahmen oder -bügel ausgebildet ist, wobei bevorzugt zum Verstellen dienende Schwenkachsen mit Drehachsen der Rollen (35) zusammenfallen.

## Claims

1. A sawing apparatus for a cutting separation of a workpiece comprising
a support construction (19, 19') at which at least one drive roller (13) and at least one deflection roller (15) arranged spaced apart therefrom are rotatably supported;
a motor (17) for driving the drive roller (13); and
a saw wire (11) which is formed as a closed loop and which is guided via the drive roller (13) and via the deflection roller (15),
wherein the saw wire (11) is configured for an isotropic cutting and the support construction (19) defines a projection region (27) in which the saw wire (11) is surrounded by a free space; wherein
the support construction (19, 19') comprises at least one support (23, 33) and at least two arms (24, 24', 25, 25') for the drive roller (13) and for the deflection roller (15) attached to the support (23, 33); and wherein the support (23, 33) and the arms (24, 24', 25, 25') together span the projection region (27),
**characterized in that**
a splitting wedge (23) is provided as the support and its thickness substantially corresponds to the cut width predefined by the saw wire (11).

2. A sawing apparatus in accordance with claim 1,
**characterized in that**
the splitting wedge (23) is adjustable between an areal configuration and an angled configuration, preferably by means of a hinge arrangement or joint arrangement (39).

3. A sawing apparatus in accordance with claim 1 or claim 2,
**characterized in that**
the support construction (19') comprises a hoop (37) spanning the projection region (27).

4. A sawing apparatus in accordance with at least one of the preceding claims,
**characterized in that**
the drive roller (13) and/or the deflection roller (15) has/have guide grooves for the saw wire (11), with the base and/or the walls of the guide grooves preferably each being designed as smooth with respect to the dimensions of cutting elements (12) of the saw wire (11).

5. A sawing apparatus in accordance with at least one of the preceding claims,
**characterized in that**
the drive roller (13) and/or the deflection roller (15) is/are adjustably supported at the support construction (19, 19') to tension the saw wire (11).

6. A sawing apparatus in accordance with at least one of the preceding claims,
**characterized in that**
the drive roller (13) and/or the deflection roller (15) is/are replaceable.

7. A sawing apparatus in accordance with at least one of the preceding claims,
**characterized in that**
the drive roller (13) and/or the deflection roller (15) is/are manufactured from a hard plastic material.

8. A sawing apparatus in accordance with at least one of the preceding claims,
**characterized in that**
the support construction (19') is adjustable and is in particular configured as a pivot frame or pivot hoop, with pivot axes which serve for adjustment preferably coinciding with axes of rotation of the rollers (35).

## Revendications

1. Dispositif de sciage pour couper une pièce à usiner par enlèvement de copeaux, comportant une structure de support (19, 19') sur laquelle sont montés mobiles en rotation au moins une poulie d'entraînement (13) et au moins une poulie de renvoi (15) agencée à distance de celle-ci,
un moteur (17) pour entraîner la poulie d'entraînement (13), et
un câble de sciage (11) réalisé en forme de boucle fermée, guidé par la poulie d'entraînement (13) et par la poulie de renvoi (15),
dans lequel
le câble de sciage (11) est réalisé pour une coupe isotrope, et la structure de support (19) définit une zone de portée (27) dans laquelle le câble de sciage (11) est entouré par un espace libre,
la structure de support (19, 19') comprend au moins un support (23, 33) et au moins deux bras (24, 24', 25, 25') attachés au support (23, 33) pour la poulie d'entraînement (13) et pour la poulie de renvoi (15),
le support (23, 33) et les bras (24, 24', 25, 25') définissent conjointement la zone de portée (27),
**caractérisé en ce que**
un coin de fendage (23) est prévu en tant que support, dont l'épaisseur correspond sensiblement à la largeur de coupe prédéterminée par le câble de sciage (11).

2. Dispositif de sciage selon la revendication 1,
**caractérisé en ce que**
le coin de fendage (23) est réglable entre une configuration surfacique et une configuration angulaire, de préférence au moyen d'un agencement formant charnière ou articulation (39).

3. Dispositif de sciage selon la revendication 1 ou 2,
**caractérisé en ce que**
la structure de support (19') comprend un arceau (37) qui définit la zone de portée (27).

4. Dispositif de sciage selon l'une au moins des revendications précédentes,
**caractérisé en ce que**
la poulie d'entraînement (13) et/ou la poulie de renvoi (15) présentent des gorges de guidage pour le câble de sciage (11), et de préférence le fond et/ou les parois des gorges de guidage sont réalisé(e)s chacun(e) lisse par rapport aux dimensions d'éléments de coupe (12) du câble de sciage (11).

5. Dispositif de sciage selon l'une au moins des revendications précédentes,
**caractérisé en ce que**
la poulie d'entraînement (13) et/ou la poulie de renvoi (15) sont montées de façon réglable sur la structure de support (19, 19') pour tendre le câble de sciage (11).

6. Dispositif de sciage selon l'une au moins des revendications précédentes,
**caractérisé en ce que**
la poulie d'entraînement (13) et/ou la poulie de renvoi (15) sont interchangeables.

7. Dispositif de sciage selon l'une au moins des revendications précédentes,
**caractérisé en ce que**
la poulie d'entraînement (13) et/ou la poulie de renvoi (15) sont réalisées en une matière plastique dure.

8. Dispositif de sciage selon l'une au moins des revendications précédentes,
**caractérisé en ce que**
la structure de support (19') est réglable et réalisée en particulier sous forme de cadre ou d'arceau pivotant, et de préférence des axes de pivotement servant au réglage coïncident avec des axes de rotations des poulies (35).
